# EUROPEAN PATENT APPLICATION

(11) **EP 1 527 913 A2**
(43) Date of publication of application: **04.05.2005**
(21) Application number: 04024182.0
(22) Date of filing: 11.10.2004
(51) Int. Cl.: B60H 1/00

(54) **Air conditioning apparatus for rear seat arrangement**

(30) Priority: 27.10.2003 US 694253
(71) Applicant: Denso International America, Inc., Southfield, Michigan 48086-5133 (US)
(72) Inventor: Roland, Timothy, Clarkston MI 48348 (US); Crocker, Glenn, Marietta GA 30067 (US)
(74) Representative: KUHNEN & WACKER

(57) **Abstract**

An air conditioning ducting for a rear seated passenger is provided in a front seat to supply the air conditioned in an air conditioning unit to the rear seated passenger. The apparatus has a flexible ducting, which can be transformed in conjunction with the travel of the front seat or a folded condition of the front-side seat. A flexible duct member in the ducting may have a U-shape to be transformed, and/or the ducting can be detachable from a duct which lead the air conditioned in the air conditioning unit to the ducting in conjunction with a folded-up or removed condition of the front seat.

## Description

### FIELD OF THE INVENTION

The present invention relates to an arrangement of an air conditioning apparatus for a rear seat arrangement(s), especially suitable for a vehicle air conditioning for an arrangement(s) of second row and/or third row of the vehicle.

### BACKGROUND OF THE INVENTION

An air conditioning apparatus for a rear seat has been proposed. For example, an air conditioning apparatus for a rear seated passenger is provided at a front seat as shown in JP-A-11-192289, or is attached to a backside face of a back-support member of the front seat as shown in USP 4,840,115. These proposed air conditioning apparatus do not have enough flexibility with respect to the movement of the front seat.

### SUMMARY OF THE INVENTION

This invention is to provide an air conditioning apparatus for a rear seat(s) having enough flexibility of a duct with respect to the movement of a front seat.

According to a first aspect of the invention, the air conditioning apparatus has an air conditioning unit conditioning the air to be supplied to a passenger compartment, a flexible duct connected to the air conditioning unit and arranged close to a seat portion of a front seat, and an air blow-out port connected to the flexible duct and provided in a back-support portion of the front seat so that the air is blown from the blow-out port toward a rear-seated passenger.

The flexible duct may be U-shaped so that a bottom thereof is oriented toward a front side of a vehicle.

Especially, in a minivan-type vehicle, the vehicle has a second-row seat and a third-row seat. The second or third row seat may be fully folded up or removed from a floor of the vehicle. In this case, a connection duct such as a floor duct may be provided and a ducting to which the blow-out port is attached is connected to the connection duct by a fit-connecting member such as a rubber grommet, so that the ducting is detached from the connection duct when the seat containing the ducting is fully folded up or removed from the floor.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 is a schematic cross sectional view of an air conditioning apparatus for a rear seat at an original position in the first embodiment of the present invention;

FIG. 2 is a schematic cross sectional view of an air conditioning apparatus for a rear seat at a moved position in the first embodiment of the present invention;

FIG.3 is a schematic cross sectional view of an air conditioning apparatus for a rear seat at a down position and a tilted (raised) position in a second embodiment of the present invention;

FIG.4 is a schematic cross sectional view of an air conditioning apparatus for a rear seat at a down position and a tilted (raised) position in a third embodiment of the present invention;

FIG.5 is a schematic cross sectional view of an air conditioning apparatus for a rear seat at a removed position in a modified embodiment of the second embodiment in the present invention;

FIG.6 is a schematic cross sectional view of an air conditioning apparatus for a rear seat at a down position in the modified embodiment of the second embodiment in the present invention;

FIG. 7 is an enlarged perspective view showing an end portion of a floor duct in the modified embodiment of the second embodiment in the present invention;

FIG. 8A is an enlarged cross sectional view showing an opening protrusion as an air tight connection in the modified embodiment of the second embodiment in the present invention; and

FIG. 8B is an enlarged and partial front view showing the opening protrusion from a direction of the arrow A in FIG. 8A in the modified embodiment of the second embodiment in the present invention.

### DETAILED DESCRIPTION OF THE PREFERRED EMBODIMENTS

The following description of the preferred embodiment(s) is merely exemplary in nature and is in no way intended to limit the invention, its application, or uses. Specific embodiments of the present invention will now be described hereinafter with reference to the accompanying drawings in which the same or similar component parts are designated by the same or similar reference numerals.

First, an air conditioning apparatus of the present invention may especially be adapted to a front seat, or a first-row seat of a vehicle in this embodiment. It could be adapted to a second-row seat of a vehicle such as a mini van. Namely, a front seat means, in this invention, a seat which is arranged in front of a rear-side seat such as a rear seat in a sedan, a second row seat or a third row seat in a minivan.

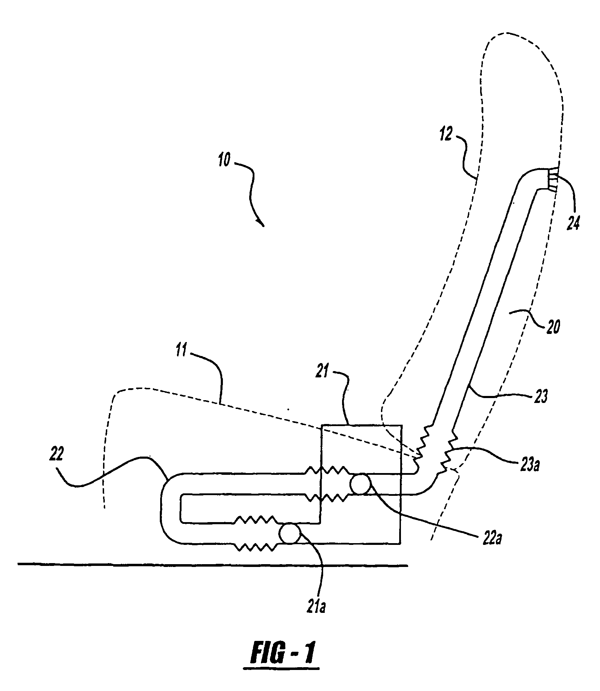

In Fig. 1, a front seat 10 is shown with a broken line. The front seat 10 has a seat portion 11 and a back-support portion 12. These portions are basically the same as those of a normal seat currently provided in a conventional vehicle. These portions are usually filled with foam or cushion material.

The back-support portion 12 is pivotally connected to the seat portion 11 (not shown), so that it can be leaned in a back or forward direction, or folded down on the seat portion 11. The seat portion 11 can travel in a back and forward direction along a seat slide mechanism (not shown) and in a height direction so as to be adjusted in a position at which a driver or passenger desires. A ducting in the front seat 10 will be described in detail later.

In this embodiment, an air conditioning unit is conventionally installed inside an instrumental panel (both of them are not shown). The air conditioning unit conventionally has a normal configuration, that is, it has an unit case, a blower unit attached to the case to cause the flow of air, an evaporator, a heater unit, an air-mixing door, some ducts, blow-out ports and the like. One of the ducts extends to a center console of the vehicle (not shown), and is connected to a center duct 21 (partially shown) for the air conditioning apparatus for a rear seat.

The center duct 21 is branched out to go under the seat 10 to a connector 21 a. A flexible duct member 22 of a flexible duct 20 (a rear-side seat duct) is connected to the connector 21 a. In this embodiment, the flexible duct member 22 may be a bellows member. The flexible duct member 22 is arranged in a cavity or recess (not shown) formed in the foam of the seat portion 11. The cavity in the seat portion allows the flexible duct member 22 to move therein. The flexible duct 22 has a U-shape in which a bottom of the U-shape is oriented to a front side of the vehicle. The flexible duct 22 is connected to a leading duct member 23 through a connector 22a. The leading duct member 23 is supported by the foam inside the back-support portion 12. The leading duct member 23 has, in this embodiment, a flexible portion 23a located at a boundary between the seat portion 11 and the back-support portion 12, so as to be able to bend when the back-support portion 12 is folded in the forward or back direction, or the leading duct member 23 may be entirely flexible. The leading duct member 23 is connected to a blow-out port 24 provided at a back surface of the back-support portion 12. The air conditioned in the air conditioning unit is led to the port 24 through the flexible duct 20. The port 24 is located at a position suitable for the correct position to direct air to the occupant's body and face. The port 24 has a grill for controlling the flow and the direction of the conditioned air. Also, the port 24 has the capability to be closed.

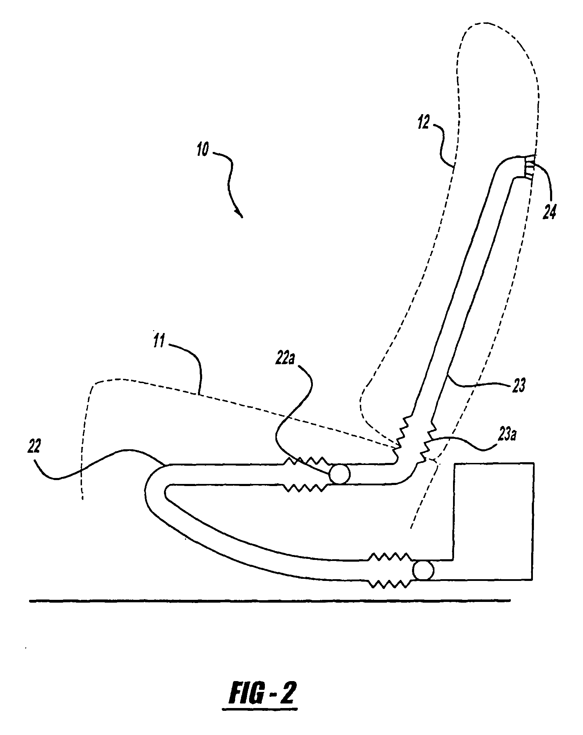

As shown in Fig. 2, the rear-side seat duct 20 moves with the travel of the seat 10. Especially, the flexible duct member 22 allows the rear-side seat duct 20 to move in conjunction with the travel of the seat 10 by transforming its U-shape in any direction. When the seat portion 11 is raised to a higher position, the flexible duct member 22 changes its configuration such that the two sides of the U-shape are further away from one another, in this embodiment.

The rear-side seat duct 20 can be made by a blow mold process or an injection mold process. In this embodiment, although the connectors 21a, 22a are provided to connect the duct members, the rear-side seat duct 20 can be made as a single duct member without connectors in a forming process such as the injection molding.

Although the U-shape of the flexible duct member 22 is disposed such that a U-character of the shape faces a plane defined by a traveling direction of the vehicle and a vertical direction of the vehicle, it can be disposed such that the U-character of the shape faces a plane defined by the traveling direction of the vehicle and a horizontal direction of the vehicle so that the U-shaped flexible duct member 22 looks like a ring on the floor of the vehicle.

In the first embodiment described above, although the rear seat duct 20 is adapted to the first-row seat, it can be adapted any seat in a vehicle.

Moreover, the center duct 21 can be a floor duct which is covered with a mat or the like as is disclosed in embodiments below.

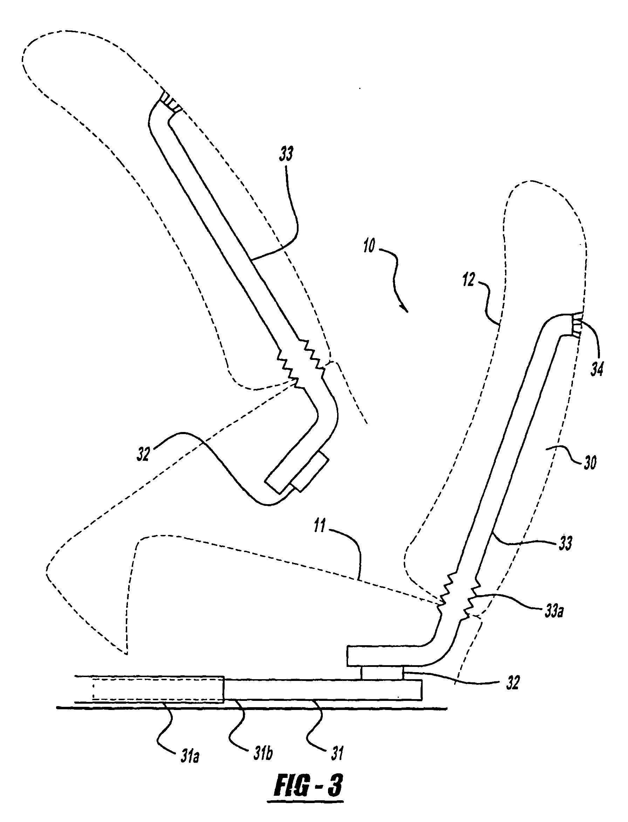

Next, a second embodiment will be described with reference to Figs. 3 and 4. In this embodiment, a seat 10 may, or may not slide with respect to a floor of a vehicle such as a second-row seat in a minivan. This seat can be fully folded up. That is, a back-support portion can be folded down so as to contact a seat portion 11. Further, the seat portion can pivotally rotate with respect to a certain point as shown in Fig. 3. A dashed line for the seat 10 shows a folded state of the seat portion 11, but does not show the final folded position. Ordinarily, the seat portion of a second-row or third-row seat in a minivan can pivotally rotate with respect to the floor of the vehicle to be folded up. Therefore, in this embodiment, a rear-side seat duct 30 has a leading duct member 32 that can be removable from a floor duct 31 when the seat portion 11 of the seat 10 is pivotally rotated so as to be apart from the floor of the vehicle. A rubber grommet 32 is attached to the leading duct member 33 to achieve the air-tight connection between the floor duct 31 and the leading duct member 33 when the grommet 32 contacts the floor duct 31. The leading duct 33 also has a flexible portion 33a to allow it to bend when the back-support portion 12 is reclined. An outlet of the leading duct 33 is connected to a blow-out port 34. In this embodiment, the seat 10 also can be removable from the floor.

Moreover, in this embodiment, a floor duct 31 can have a fixed floor duct member 31 a and a slidable duct member 31 b slidably connected to the fixed floor duct member 31 a. In this case, the floor duct 31 allows the seat 10 to slide to the front side or the rear side of the vehicle.

A third embodiment of the present invention Will be described with reference to Fig. 4. Like the second embodiment, a seat 10 can be folded up so that a seat portion thereof is spaced from a floor of a vehicle. In this embodiment, a rear-side seat duct 40 has a flexible duct member 42 which is connected to a floor duct 41 at a position close to a rotatable point of the seat member 11 through a flexible member 42a. The rear-side seat duct 40 also has a leading duct member 43. The leading duct member 43 has a flexible portion 43a, it is connected to the flexible duct member 42 through a connector 42b, and it is connected to a blow-out port 44.

The flexible member 42a may be a bellows member. The flexible member 42a allows the rear-side seat duct 40 to travel in conjunction with the movement of the seat 10. In this embodiment, the rear-side seat duct 40 is not necessarily removable from the floor duct 41. If the seat 10 can be removed from the floor of the vehicle, an air-tight connection like the one shown in Fig. 3 may be attached to the flexible member 42a, or a tip portion of the flexible member 42a has an air-tight connection configuration.

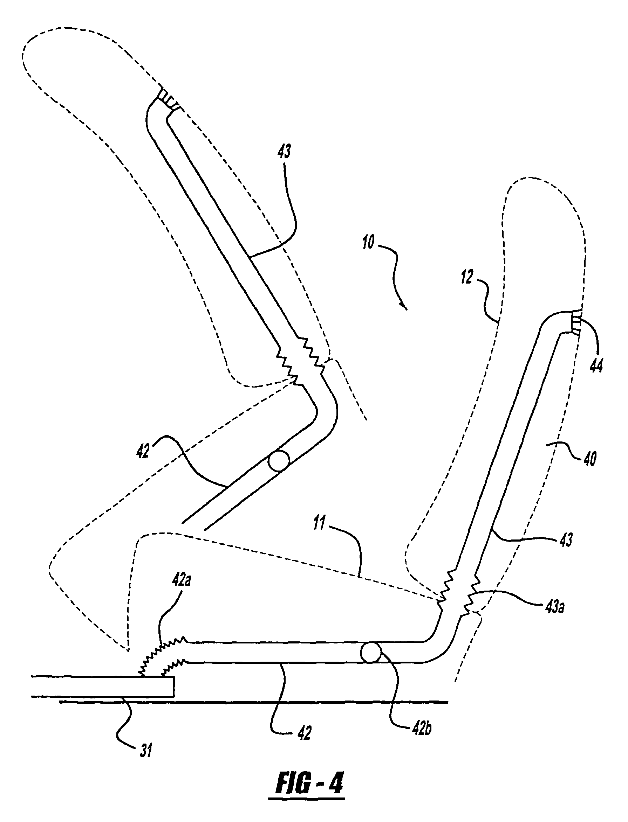

A modified embodiment of the second embodiment in the present invention will be described with reference to Figs. 5 to 8B. In the second embodiment, when the seat 10 is removed from the floor of the vehicle or is pivotally rotated or folded up so as to be spaced from the floor of the vehicle to make more cargo space in the vehicle, the floor duct is left open at an end portion thereof. In this situation, extraneous substance such as dust, sand, mud or water can enter into the duct. In this embodiment, a floor duct 51 has a door 52.

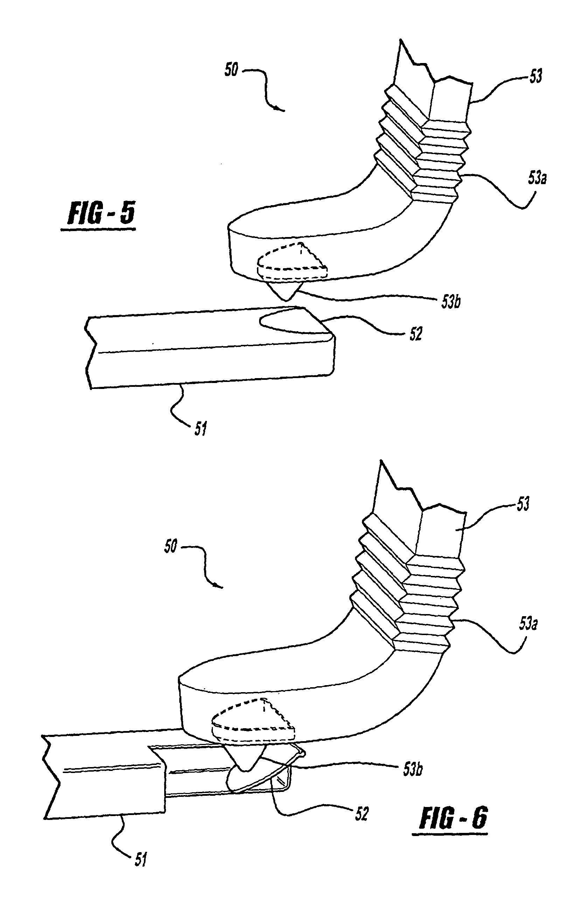

The door 52 is capable of closing an opening of the floor duct 51 for communication between the floor duct and a leading duct 53 of a rear-side seat duct 50 when the seat portion 11 of the seat 10 is folded up to prevent the extraneous substance from getting into the floor duct 51 as shown in Fig. 5. Also, the door 52 is opened when the seat 10 is in a down position as shown in Fig. 6. The door 52 is pivotally rotatable with respect to a shaft 52a, and is forced to close the opening by a spring member 52b to push the door 52 toward a closing position. In Fig. 6, the floor duct is partially cut out to show how the door 52 and an opening protrusion 53b of the leading duct work together.

The spring member 52b is made of a plate metal having a L-shape, which is attached to a wall of the floor duct 51 in this embodiment as shown in Fig. 7. The spring member 52b can be some other type of spring such as a coil spring.

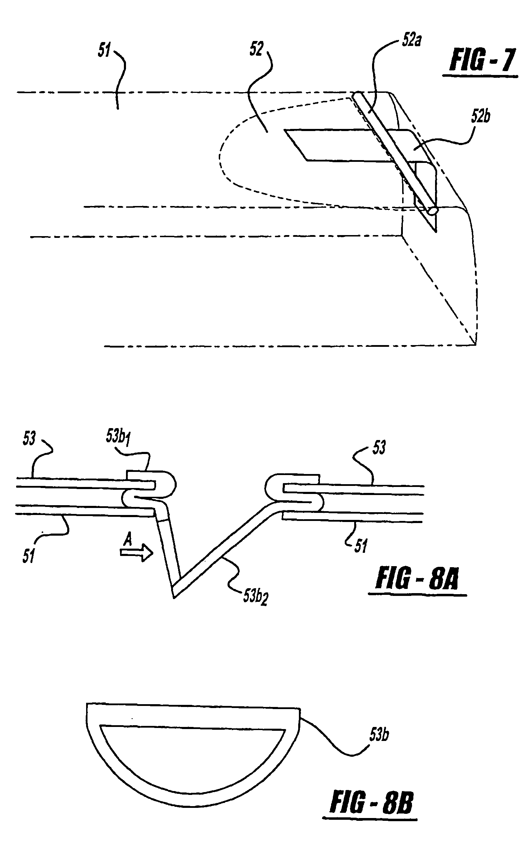

On the other hand, an opening protrusion 53b is attached to an opening provided at a bottom of the leading duct 53. The opening protrusion 53b is a rubber grommet having stiffness enough to open the door 52 when the seat portion 11 of the seat is at a down position. The stiffness can be gained by increasing its thickness. The opening protrusion 53b achieves an air-tight connection between the floor duct 51 and the leading duct member 53 in Fig. 8 in which a cross section of the opening protrusion 53b is shown with a part of the floor duct 51 and the leading duct member 53. As shown in Fig. 8A, the opening protrusion 53b is attached to the leading duct member 53 with its connecting end 53b₁. The air sent from the air conditioning unit and passing through the floor duct 51 passes an opening (shown in Fig. 8B) provided in a protrusion 53b₂ along a direction shown as an arrow A, and goes up into the leading duct 53 toward a blow-out port (not shown). The opening protrusion 53b also serves as an air tight connection as shown in Fig. 8A.

In this embodiment, the door 52 prevents the extraneous substance from coming into the floor duct 51 even when the leading duct member 53 is detached from the floor duct 51 in conjunction with the seat 10 being folded up or removed from the floor.

The description of the invention is merely exemplary in nature and, thus, variations that do not depart from the gist of the invention are intended to be within the scope of the invention. Such variations are not to be regarded as a departure from the spirit and scope of the invention.

For example, the detachable feature described in the second, third or modified embodiment can be adapted to the duct member described in the first embodiment, as so these are to have flexibility in ducting structure as an air conditioning apparatus for a rear-side seated passenger which can be adapted to various types of seat structure.

In the modified embodiment, although the door 52 is provided to close the opening formed in the floor duct 51, instead of using the door 52, a rid member can be placed on the opening formed in the floor duct 51 to prevent the extraneous substance from getting into the floor duct 51.

## Claims

1. An air conditioning apparatus for a rear seat comprising:
an air conditioning unit capable of supplying the conditioned air to a cabin of a vehicle;
a ducting provided at a front seat in the vehicle having a flexible duct member with a U-shape to allow said ducting to travel in conjunction with the travel of the front seat; and
a blow-out port from which the conditioned air, which is sent from the air conditioning unit, is blown out toward a passenger being seated on the rear seat, said blow-out port provided in an appropriate position at a back surface of said front seat to supply the conditioned air to said passenger, and said blow-out port connected to said ducting in the front seat.

2. An air conditioning apparatus according to claim 1, further comprising a connection duct connecting the air conditioning unit and the ducting.

3. An air conditioning apparatus according to claim 2, wherein said connection duct is a center duct located in a center console of the vehicle.

4. An air conditioning apparatus according to claim 2, wherein said connection duct is a floor duct located on a floor inside the vehicle.

5. An air conditioning apparatus according to claim 2, further comprising an air tight connection provided between the ducting and the connection duct so that the ducting can be spaced from the connection duct when the front seat is folded up or removed from a floor of the vehicle.

6. An air conditioning apparatus according to claim 1, wherein said ducting further comprises:
a leading duct member provided in a back-support portion of the front seat, having two ends, wherein one of the two ends is connected to said flexible duct member, and other one of the two ends is connected to the blow-out port,
wherein said flexible duct is provided in a cavity formed in a seat portion of the front seat.

7. An air conditioning apparatus according to claim 1, wherein said ducting is formed as a single member by a molding process.

8. An air conditioning apparatus for a rear seat comprising:
an air conditioning unit capable of supplying the conditioned air to a cabin of a vehicle;
a connection duct leading the conditioned air to a rear side of the vehicle;
a ducting provided at a front seat in the vehicle having a duct member and a blow-out port from which the conditioned air, which has passed through the connection duct, is blown out toward a passenger being seated on the rear seat; and
an air tight connecting member provided between said connection duct and said ducting, said air tight connecting member providing air-tight connection therebetween, further said air tight connecting member capable of allowing said ducting to be detached from said connection duct in conjunction with a folded up condition of said front seat or a removed condition of said front seat.

9. An air conditioning apparatus according to claim 8, further comprising:
a door provided at the connection duct to close an opening formed in the connection duct for communicating with the ducting when the ducting is detached from the connection duct; and
an opening protrusion provided at the air tight connecting member, said opening protrusion having an opening to communicate with the connection duct, and said opening protrusion opening said door so that the air tight connecting member fits with the opening formed in the connection duct when the front seat is in a down position, so that the conditioned air go through the opening formed in the opening protrusion.
